Europäisches Patentamt

European Patent Office

Office européen des brevets

(11) Numéro de publication: **0 351 299**
**A1**

## (12) DEMANDE DE BREVET EUROPEEN

(21) Numéro de dépôt: **89401975.1**

(22) Date de dépôt: **10.07.89**

(51) Int. Cl.⁵: **H 01 G 4/08**
**H 01 G 4/30**

(30) Priorité: **12.07.88 FR 8809456**

(43) Date de publication de la demande:
**17.01.90 Bulletin 90/03**

(84) Etats contractants désignés: **DE GB IT**

(71) Demandeur: **EUROFARAD-EFD**
**93 rue Oberkampf**
**F-75540 Paris Cédex11 (FR)**

(72) Inventeur: **Coirie, Pierre**
**1, Rue de la Liberté**
**F-94300 Vincennes (FR)**

**Marchand, Daniel**
**25, rue Léon Frot**
**F-75011 Paris (FR)**

(74) Mandataire: **Martin, Jean-Jacques et al**
**Cabinet REGIMBEAU 26, Avenue Kléber**
**F-75116 Paris (FR)**

(54) Procédé de fabrication d'un condensateur électrique haute-tension et condensateur ainsi obtenu.

(57) L'invention concerne un procédé de fabrication d'un condensateur électrique haute-tension et le condensateur ainsi obtenu.

Une pluralité de feuilles (FE) en mica reconstitué sont conditionnées et une zone électriquement conductrice (ZE1, ZE2) est formée sur au moins une face de chaque feuille (FE) pour constituer une électrode d'un premier ou d'un deuxième type pour le condensateur. Une pluralité des feuilles (FE) en mica reconstitué est empilée dans une matrice de formage (MF), deux électrodes successives de type différent étant, dans l'empilement, séparées par au moins une épaisseur d'une feuille de mica reconstituée. Un traitement thermique et une mise en pression P permettent de conditionner l'empilement en un bloc sensiblement homogène, ce bloc étant soumis ensuite à une imprégnation au moyen d'une résine, laquelle est ensuite polymérisée pour obtenir un bloc final. Le bloc final est découpé en blocs élémentaires et un apport de matériau électriquement conducteur est effectué pour relier les électrodes du premier type d'une part, et les électrodes du deuxième type d'autre part, pour former, pour chaque bloc élémentaire, un condensateur.

FIG.1

EP 0 351 299 A1

## Description

## PROCEDE DE FABRICATION D'UN CONDENSATEUR ELECTRIQUE HAUTE TENSION ET CONDENSATEUR AINSI OBTENU

La présente invention est relative à un procédé de fabrication d'un condensateur électrique haute-tension.

Selon la technique actuelle la plus courante de fabrication de condensateurs haute-tension, il est avantageux de réaliser ces derniers à partir d'un ruban ou film en matériau diélectrique tel qu'un mica reconstitué désigné par "micapaper" en langage anglo-saxon, ce film étant bobiné conjointement avec une feuille métallique correspondante placée sur chaque face de la feuille de mica reconstitué. Chaque feuille métallique est munie de languettes permetant, après métallisation, de former les bornes de contact du condensateur. Le mica reconstitué est normalement diponible dans le commerce en feuilles dont l'épaisseur est comprise entre 18 μm et 50 μm, ces feuilles consistant en un arrangement plan de particules de mica pulvérulent dont la cohésion est assurée par les seules forces de Van der Wall. Ce type de produit est fabriqué et distribué aux Etats-Unis d'Amérique.

Un séchage de l'enroulement, ou bobinage ainsi obtenu est effectué, suivi d'une imprégnation au moyen d'une résine epoxyde, une résine polyester ou une résine au silicone et d'une polymérisation correspondante en fonction de l'application ou de l'utilisation ultérieure du condensateur considéré.

Les condensateurs ainsi obtenus présentent une bonne tenue en tension en raison des propriétés diélectriques du mica, et une bonne tenue au phénomène du vieillissement.

L'utilisation de plus en plus large de ce type de composant électronique dans les matériels à haute fonctionnalité et à haute technicité, tels que les matériels électroniques embarqués sur aéronefs ou satellites artificiels impose, relativement à leur cahier des charges, une diminution maximale de la masse de ces composants, ainsi que de leurs cotes d'encombrement, tout en maintenant leur performance de capacité électrique et de tenue en tension. Cette dernière contrainte a pour conséquence un gain nécessaire de densité d'énergie stockée par ce type de composant électronique.

Une première approche, au moyen de la technique traditionnelle précitée, peut consister à utiliser des matériaux d'imprégnation de meilleure qualité et à réduire l'épaisseur du matériau diélectrique. Cette solution a cependant pour inconvénient de provoquer une augmentation de gradient de tension et une diminution consécutive de la fiabilité des condensateurs ainsi obtenus, en raison des risques de défauts plus importants de la substance du matériau diélectrique.

En outre, le mode de bobinage proprement dit provoque des perturbations de structure du matériau diélectrique, notamment pour les faibles rayons de courbure du bobinage, ce qui provoque des défauts de tenue en tension. Ce même mode de bobinage provoque également des pertes de capacité réellement obtenue, en raison de l'existence d'un coefficient de foisonnement entre capacité réelle et théorique.

L'utilisation de mica brut comme matériau diélectrique, encore appelé mica clair, ne peut être valablement envisagée en raison de la double limitation du dimensionnement des feuilles de ce matériau dont l'épaisseur ne peut être inférieure à 20 μm et les dimensions surfaciques ne peuvent être supérieures à 36 mm x 54 mm. Les limitations précitées ont pour conséquence l'impossibilité de mise en oeuvre de condensateurs dont la capacité est supérieure à 47 nF et dont la tension de service est supérieure à 5 KV.

La présente invention a pour but de remédier aux inconvénients précités par l'application d'une technique nouvelle au matériau diélectrique tel que le mica reconstitué.

- Un autre objet de la présente invention est la mise en oeuvre, conformément à la technique précitée, de condensateurs électriques haute-tension pour lesquels le gain en densité d'énergie stockée est supérieur à 25 %.

- Un autre objet de la présente invention est la mise en oeuvre, conformément à la technique précitée, de condensateurs haute-tension présentant des caractéristiques adaptées en fonction de l'utilisation considérée.

Le procédé de fabrication d'un condensateur électrique haute-tension objet de l'invention est remarquable en ce qu'il consiste :
- à conditionner une pluralité de feuilles de matériau diélectrique du type mica reconstitué ;
- à former sur au moins une face de chaque feuille du matériau diélectrique une zone électriquement conductrice de façon à constituer une électrode de premier type ou de deuxième type pour le condensateur ;
- à empiler, dans une matrice de formage, une pluralité desdites feuilles de mica reconstitué, deux électrodes successives de type différent étant, dans l'empilement formé, séparées par au moins une épaisseur d'une feuille de mica reconstitué ;
- à soumettre l'empilement de feuilles de mica reconstitué à un traitement thermique et à une pression de façon à conditionner l'empilement en un bloc sensiblement homogène ;
- à soumettre ledit bloc sensiblement homogène à une imprégnation au moyen d'une résine polymérisable ;
- à soumettre le bloc sensiblement homogène imprégné à une polymérisation pour obtenir un bloc final ;
- à effectuer un apport de matériau électriquement conducteur pour relier d'une part, lesdites électrodes de premier type et, d'autre part, lesdites électrodes de deuxième type pour constituer, pour chaque bloc élémentaire, un condensateur.

Le condensateur électrique haute-tension objet de l'invention est remarquable en ce qu'il est formé d'un empilement d'une pluralité de couches empilées de matériau diélectrique en mica recons titué, chaque couche successive étant séparée de la suivante par au moins une tranche électriquement conductrice formant électrode d'un premier ou d'un deuxième type, les électrodes du premier, respectivement du deuxième type étant interconnectées chacune à chacune pour former les bornes de contact dudit condensateur.

Le condensateur électrique haute-tension objet de l'invention trouve application à tout dispositif d'électronique industrielle, d'électronique aéroportée, atmosphérique ou spatiale.

Le procédé, et le condensateur électrique obtenu par la mise en oeuvre du procédé objet de l'invention, seront décrits de manière plus détaillée dans la description ci-après, en relation avec les dessins dans lesquels :

- la figure 1, en ses éléments a) à g), représente de manière schématique un mode de réalisation avantageux non limitatif du procédé objet de l'invention ;

- la figure 2 représente une variante avantageuse non limitative de mise en oeuvre du procédé tel que représenté en figure 1 ;

- la figure 3a représente, en coupe selon un plan de symétrie longitudinal, un condensateur mis en oeuvre conformément au procédé objet de l'invention ;

- la figure 3b représente, également en coupe selon un plan de symétrie longitudinal, une variante de réalisation d'un condensateur selon l'invention ;

- la figure 4a représente, en coupe selon un plan de symétrie longitudinal, un mode de réalisation préférentiel non limitatif d'un condensateur conforme à l'objet de la présente invention ;

- la figure 4b représente un détail de réalisation d'un condensateur tel que représenté en figure 4a, dans une variante de réalisation non limitative ;

La figure 5 représente, en coupe selon un plan de symétrie longitudinal, une autre variante de réalisation non limitative d'un condensateur conforme à l'objet de la présente invention.

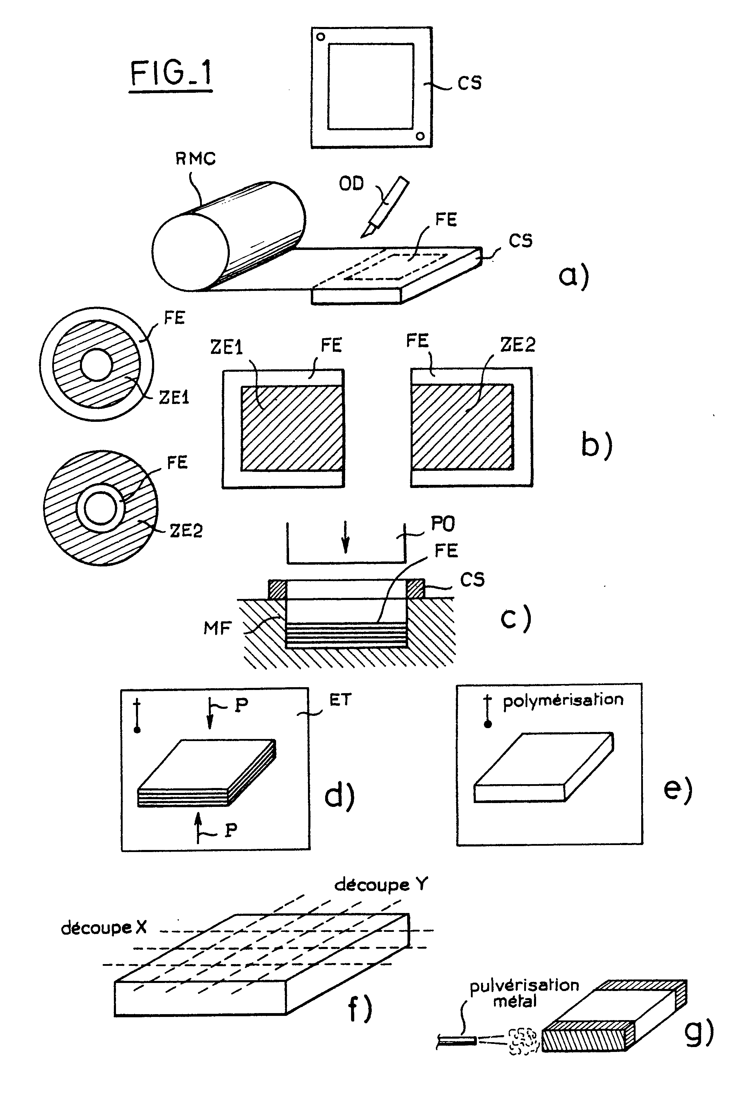

Le procédé objet de l'invention sera tout d'abord décrit en liaison avec la figure 1.

Conformément à la figure précitée, le procédé de fabrication d'un condensateur électrique haute tension objet de l'invention consiste à conditionner une pluralité de feuilles, notées FE, de matériau diélectrique, ce matériau diélectrique étant constitué par du mica reconstitué.

Un mode de conditionnement particulièrment avantageux non limitatif pour la mise en oeuvre du procédé objet de l'invention consiste par exemple, ainsi que représenté au point a) de la figure 1, à encoller un cadre support noté CS, constitué par exemple par un cadre creux de forme sensiblement carrée, sur lequel est appliquée une feuille FE de mica reconstitué à partir d'un rouleau de mica MRC. L'application de la feuille de mica FE sur le cadre CS permet ensuite à l'aide d'un outil de découpe OD de préparer un ensemble constitué par le cadre support CS recouvert d'une feuille de mica reconstitué FE.

Bien entendu, les dimensions du cadre support CS et de la feuille FE, sont adaptées en conséquence.

Ainsi qu'on l'a représenté en outre au point b) de la figure 1, le procédé objet de l'invention consiste ensuite à former sur au moins une face de chaque feuille FE du matériau diélectrique constitué par le mica reconstitué, une zone électriquement conductrice notée ZE1 ou ZE2. Les zones électriquement conductrices ZE1, ZE2 sont formées de façon à constituer une électrode d'un premier ou d'un deuxième type pour le condensateur considéré. Ces zones ZE1, ZE2 ont une géométrie adaptée à la forme du condensateur à réaliser. Elles peuvent présenter de façon usuelle une forme rectangulaire, carrée ou circulaire. Sur le point b) de la figure 1, on a représenté les zones électriquement conductrices ZE1, ZE2 présentant un débordement assymétrique sur l'un des côtés de la feuille de matériau diélectrique FE montée sur le cadre support CS, chaque débordement affleurant le côté précité de la feuille FE pour constituer la zone de contact de la zone électriquement conductrice avec la borne de contact correspondante du condensateur formée ultérieurement.

Bien entendu, le procédé objet de l'invention ne préjuge pas de la réalisation d'électrodes du seul premier ou deuxième types, mais peut également consister à réaliser une électrode de type flottant conformément à la technique habituelle de réalisation des condensateurs céramiques par exemple.

Selon un premier mode de réalisation des zones électriquement conductrices ZE1 ou ZE2, celles-ci peuvent avantageusement, conformément au procédé objet de l'invention, être réalisées par empilage intermédiaire d'une feuille électriquement conductrice, une feuille en aluminium par exemple.

Selon un mode de réalisation préférentiel du procédé objet de l'invention, les zones électriquement conductrices ZE1 ou ZE2 peuvent être réalisées par sérigraphie au moyen d'une encre électriquement conductrice. Dans ce cas, la sérigraphie consiste à effectuer le dépôt d'une encre conductrice à base d'argent et d'un liant organique sur la zone électriquement conductrice ZE1 ou ZE2 correspondantes. Les encres couramment utilisées peuvent comporter une solution d'argent en suspension avec des liants organiques et un verre de frittage. Les techniques classiques de sérigraphie peuvent alors être utilisées, celles-ci consistant, suite au dépôt de l'encre précitée, à réaliser le motif correspondant à la zone électriquement conductrice ZE1 ou ZE2 à travers un écran, de façon classique. Bien entendu, le dépôt de l'encre conformément au motif correspondant à la zone électriquement conductrice précitée, est alors suivi d'une étape de cuisson, le motif sérigraphié et la feuille de matériau diélectrique FE étant alors soumis sur le cadre support CS, à une étape de cuisson à une température pouvant varier entre 400 et 550°C.

Suite à l'étape de formation sur au moins une face de chaque feuille FE du matériau diélectrique d'une zone électriquement conductrice, le procédé objet de l'invention consiste ensuite, ainsi que représenté au point c) de la figure 1, à empiler dans une matrice de formage notée MF, une pluralité des feuilles de mica reconstitué FE munies de leurs zones électriquement conductrices ZE1 du premier type ou ZE2 du deuxième type. Bien entendu, deux électrodes successives de type différent, c'est-à-dire du premier ou du deuxième type, sont dans l'empilement formé, séparées par au moins une épaisseur d'une feuille de mica reconstitué.

Un mode opératoire particulièrement avantageux non limitatif, ainsi que représenté en figure 1 au point c) de celle-ci, consiste par exemple à placer chaque cadre support CS à l'aplomb de la matrice de formage MF pour assurer, à l'aide d'un poinçon PO, le découpage et l'empilement successifs de chaque feuille de mica reconstitué FE muni de la zone électriquement conductrice ZE1 ou ZE2 consistant électrode du premier ou du deuxième types respectivement. De préférence, afin d'assurer une protection des feuilles FE comportant une zone électriquement conductrice, il est avantageux de placer en premier dans l'empilement une ou plusieurs feuilles FE non sérigraphiées placées sur le cadre support CS. De la même façon, en fin d'empilement des feuilles sérigraphiées, il est avantageux de terminer par une ou plusieurs feuilles non sérigraphiées de façon à assurer une protection des feuilles sérigraphiées terminant l'empilement.

Conformément au procédé objet de l'invention, celui-ci consiste ensuite, ainsi que représenté au point d) de la figure 1, à soumettre l'empilement de feuilles de mica reconstitué ainsi formé, à un traitement thermique noté T° et à une pression P de façon a conditionner l'empilement en un bloc sensiblement homogène. Le traitement par température T° et par mise en pression permet d'effectuer un frittage des verres contenus dans l'encre de sérigraphie. La température de frittage T° précitée peut être comprise entre 200°C et 1300°C environ. L'empilement précité, obtenu suite à l'étape d du procédé objet de l'invention, se présente sous forme d'un parallélépipède homogène contenant, en fonction des motifs de sérigraphie utilisés, un ou plusieurs condensateurs.

Suite à l'étape permettant de constituer un bloc sensiblement homogène précédemment cité, le procédé objet de l'invention consiste ensuite à soumettre le bloc sensiblement homogène précité à une imprégnation, au moyen d'une résine polymérisable, le bloc sensiblement homogène imprégné étant ensuite soumis à un traitement en température pour effectuer la polymérisation de la résine. Afin d'assurer une telle opération, les blocs sensiblement homogènes peuvent être montés dans une étuve ventilée, puis dans une étuve sous vide pour assurer un séchage, l'imprégnation étant effectuée au moyen d'une résine de type epoxy par exemple, de type DGEBA, et la polymérisation étant effectuée en conséquence selon les techniques classiques en fonction de la résine utilisé. L'étape de polymérisation représentée au point e de la figure 1 permet d'obtenir un bloc final.

Conformément au procédé objet de l'invention, le bloc final est ensuite découpé, la découpe s'effectuant bien entendu en fonction des motifs des zones électriquement conductrices effectivement réalisées. Cette découpe peut être effectuée par exemple à l'aide d'une machine à scier X, Y à avance pas à pas ou à l'aide de tout moyen classique. L'étape de découpe est représentée au point f) de la figure 1 et permet d'obtenir une pluralité de blocs élémentaires, chaque bloc élémentaire constituant potentiellement un condensateur.

Le procédé objet de l'invention consiste ensuite, ainsi que représenté au point g) de la figure 1, à effectuer un apport de matériau électriquement conducteur pour relier d'une part les électrodes de premier type, et, d'autre part les électrodes de deuxième type, constituées respectivement par les zones électriquement conductrices ZE1 et ZE2 pour former, pour chaque bloc élémentaire, un condensateur. Sur la figure 1, au point g) de celle-ci, on a représenté l'étape d'apport de matériau électriquement conducteur, de façon schématique, par une étape consistant à assurer une pulvérisation de métal en fusion par exemple, une telle opération étant désignée communément dans la technique de fabrication des condensateurs par "shoopage". Bien entendu, tout autre technique de métallisation telle que par exemple enduction d'encre conductrice chargée de métaux, sur les faces correspondantes de chaque bloc élémentaire, peut également être utilisée.

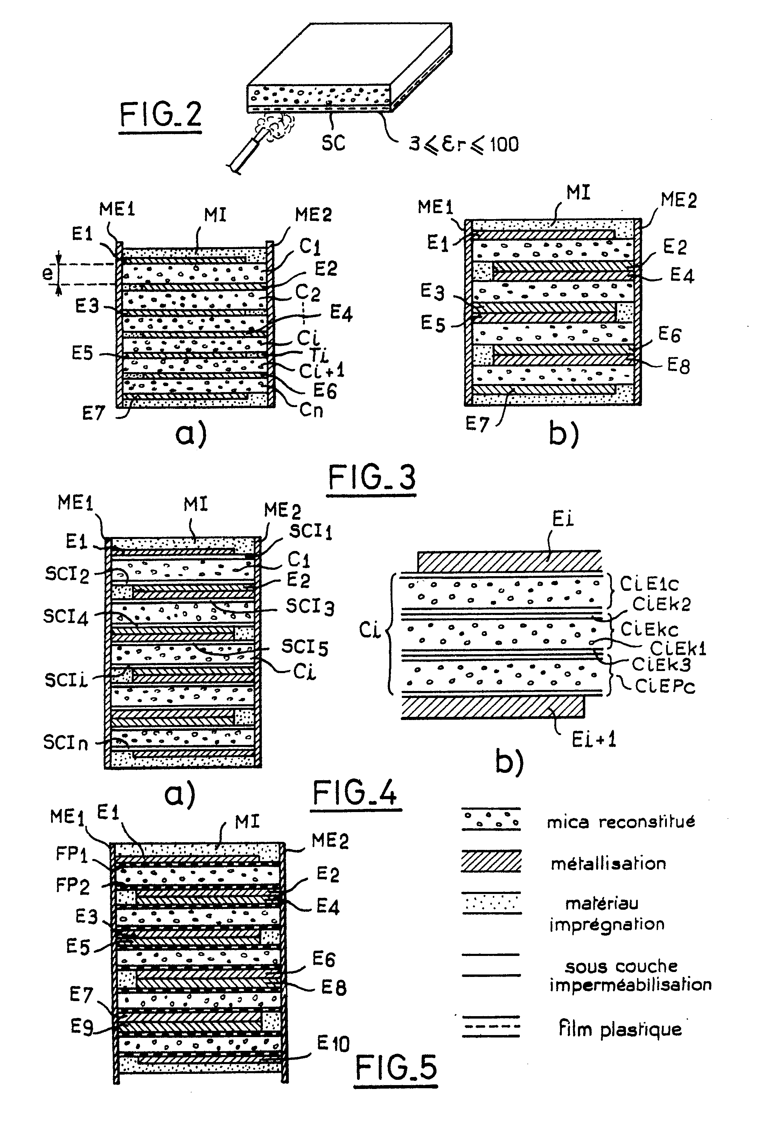

Selon une variante avantageuse non limitative du procédé objet de l'invention, telle que représentée en figure 2, celui-ci, préalablement à l'étape consistant à former une zone électriquement conductrice sur au moins une face de chaque feuille de mica reconstitué FE, peut également consister à former sur la ou les feuilles de mica reconstitué FE, une sous-couche SC d'imperméabilisation du mica reconstitué. Cette couche, désignée par couche d'imperméabilisation, permet en fait d'assurer en outre une meilleure liaison ou accrochage entre la couche sérigraphiée, lorsque la sérigraphie est utilisée, et le mica. Cette sous-couche SC a pour fonction notamment d'empêcher la pénétration de l'argent, contenu dans l'encre de sérigraphie, dans le mica reconstitué. En effet, ce matériau est poreux, notamment pour les feuilles de mica reconstitué de faible épaisseur, c'est-à-dire d'épaisseur comprise entre 18 à 20 micromètres environ.

De préférence, et afin de conférer au condensateur objet de l'invention obtenu par la mise en oeuvre du procédé tel que précédemment décrit, des caractéristiques électriques adaptées en fonction de l'utilisation de ces condensateurs, la sous-couche d'imperméabilisation SC peut être formée par dépôt d'une couche d'un matériau diélectrique dont la constante diélectrique $\varepsilon r$ a une valeur relative comprise entre 3 et 100, $3 \leq \varepsilon r \leq 100$. La couche d'imperméabilisation SC peut être une couche d'imperméabilisation totale ou partielle, le matériau utilisé pour réaliser la couche d'imperméabilisation précitée SC pouvant consister en un verre tel qu'un borosilicate de plomb, un matériau polymère, une céramique ou un matériau plastique.

Une description plus détaillée d'un condensateur électrique haute tension, obtenu par la mise en oeuvre du procédé objet de l'invention, sera maintenant donnée en liaison avec les figures 3a, 3b, 4a, 4b, 5.

Sur la figure 3a, on a représenté un condensateur obtenu par la mise en oeuvre du procédé objet de l'invention, selon un premier mode de réalisation non limitatif. Le condensateur représenté à la figure précitée, selon une vue en coupe suivant un plan longitudinal de symétrie, est formé d'un empilement d'une pluralité de couches notées Ci, de matériau diélectrique en mica reconstitué. Chaque couche successive Ci est séparée de la suivante Ci+1 par au moins une tranche notée Ti électriquement conductrice formant les électrodes du premier respectivement deuxième type E1, E2. Les électrodes du premier respectivement deuxième type E1, E3, E5, E7 et E2, E4, E6, l'indice impair désignant les électrodes du premier type et l'indice pair les électrodes du deuxième type, sont interconnectées chacune à chacune pour former les bornes de contact ME1 et ME2 respectivement du condensateur. Bien entendu, le condensateur est noyé dans le matériau d'imprégnation noté MI.

Ainsi qu'on pourra le noter sur la figure 3a, deux électrodes successives de type opposé, E1 et E2 par exemple, ou du premier et du deuxième types, sont séparées dans l'empilement par au moins une couche de matériau diélectrique en mica reconstitué.

Selon une deuxième variante de réalisation représentée en figure 3b, les deux faces de chaque couche Ci en matériau diélectrique en mica reconstitué, comportent chacune une électrode du premier ou du deuxième type, les électrodes d'une même couche Ci étant de type opposé, soit du premier et du deuxième types. Dans ce cas, ainsi qu'on l'a représenté au point b) de la figure 3, deux électrodes successives de type opposé sont séparées dans l'empilement par au moins une couche de matériau en mica reconstitué, mais deux électrodes de même type, des électrodes E2 et E4 par exemple, sont au contraire en contact direct, ces deux électrodes étant d'autre part reliées à la borne de contact ME2 du condensateur.

Bien entendu, les électrodes peuvent être formées par une encre électriquement conductrice appliquée par sérigraphie, ainsi que décrit précédemment pour la mise en oeuvre du procédé objet de l'invention, ou par une feuille métallique intermédiaire insérée lors de l'empilement des couches Ci.

Une variante avantageuse de réalisation d'un condensateur objet de l'invention sera décrite en liaison avec les figures 4a et 4b.

Conformément à la figure 4a, l'empilement comporte en outre entre chaque électrode de l'un ou l'autre type et la face correspondante de la couche de matériau diélectrique en mica reconstitué, c'est-à-dire par exemple entre les électrodes E1 et E2 et la face correspondante de la couche de matériau diélectrique en mica reconstitué C1, une sous-couche d'imperméabilisation notée $SCI_1$ du mica reconstitué. Bien entendu, de préférence, chaque couche Ci est ainsi munie d'une ou plusieurs sous-couches, sur chaque face correspondante, d'imperméabilisation.

Chaque sous-couche d'imperméabilisation SCIi est avantageusement constituée en un matériau diélectrique dont la constante diélectrique εr a une valeur relative comprise entre 3 et 100, $3 \leq εr \leq 100$.

Le matériau diélectrique constitutif de la sous-couche d'imperméabilisation SCIi est un matériau tel que par exemple un verre, un composé de borosilicate de plomb, un matériau polymère ou une céramique. La sous-couche d'imperméabilisation peut présenter une épaisseur comprise entre 1,5 et 12 micromètres en fonction de l'épaisseur choisie de la couche de mica reconstitué Ci. Le choix de la nature du matériau constitutif de la sous-couche d'imperméabilisation SCIi est alors guidé en fonction de l'utilisation du condensateur obtenu conformément à l'objet de la présente invention. Pour l'obtention de condensateurs de très forte capacité, on pourra utiliser des matériaux diélectriques présentant une très forte constante diélectrique relative, matériau tel que la céramique par exemple.

Une variante de réalisation particulièrement avantageuse d'un condensateur objet de l'invention sera décrite en liaison avec la figure 4b.

Conformément à la figure précitée, chaque couche Ci de matériau diélectrique en mica reconstitué peut être formée, de manière non limitative, d'une pluralité de couches élémentaires composites notées CiEkc constituant en fait la couche de mica reconstitué Ci. En fait, ainsi qu'on l'a représenté en figure 4b, chaque couche élémentaire composite est formée d'un empilement d'une couche élémentaire de matériau diélectrique en mica reconstitué noté CiEk1 comportant, sur au moins une de ces faces, une sous-couche élémentaire d'imperméabilisation notée CiEk2 respectivement CiEk3. Bien entendu, la couche de matériau diélectrique Ci ainsi formée d'une pluralité de couches élémentaires composites, peut alors comporter une électrode d'un premier type notée Ei sur la figure 4b et une électrode d'un deuxième type notée Ei+1 sur cette même figure. Le mode de réalisation précité, dans lequel chaque couche de matériau diélectrique en mica reconstitué est formée d'une pluralité de couches élémentaires composites pourra avantageusement être utilisée lors de la réalisation de condensateurs conformes à l'objet de la présente invention présentant des couche de matériau en mica reconstitué ; ces couches sont alors réalisées par superposition d'une pluralité de couches élémentaires composites.

Une autre variante non limitative de réalisation d'un condensateur conforme à l'objet de la présente invention sera décrite en liaison avec la figure 5.

Conformément à la figure précitée, les électrodes E1, E2 d'un premier ou d'un deuxième type peuvent être formées au moyen d'un film plastique noté FP1, FP2 métallisé. Le film plastique comporte alors une métallisation sur au moins l'une de ses faces pour constituer électrode du premier ou du deuxième type.

Le film plastique comportant les métallisations précitées est alors introduit, lors de la constitution de l'empilement, de façon analogue au procédé précédemment décrit, dans le cas de la mise en oeuvre d'électrodes sérigraphiées par exemple. Bien entendu, les films plastique métallisés sont introduits par exemple en lieu et place des feuilles métalliques destinées à constituer armature du condensateur.

Selon un mode de réalisation avantageux, le film plastique FP1, FP2 métallisé peut être un film plastique choisi dans le groupe des matériaux plastiques tels que polycarbonate, polyester, polypropylène, polysulfure de phénylène, polysulfone, polytétrafluoréthylène par exemple. Les films plastiques précités peuvent présenter une épaisseur de l'ordre de 1,5 micromètre à 2 micromètres. On comprendra que, dans ce cas, le film plastique FP1 ou FP2 joue alors le rôle de la sous-couche d'imperméabilisation. En outre, sur la figure 5, on a représenté une légende de la représentation des matériaux utilisés pour la mise en oeuvre des condensateurs conformément à l'objet de l'invention, dans les différents modes de réalisation.

Dans tous les modes de réalisation précités, les technologies développées permettent d'obtenir des condensateurs sous forme de blocs ou puces qui peuvent être utilisés en l'état ou avec des connexions de cuivre étamé et surmoulé.

On a ainsi décrit un procédé de mise en oeuvre d'un condensateur électrique haute-tension et un condensateur électrique haute-tension ainsi obtenu particulièrment performant. Des essais réalisés, notamment lorsque les électrodes des condensateurs sont constitués par sérigraphie ou par utilisation de produits métalliques constituant armature, ont montré que la capacité volumique de ce type de condensateurs pouvait être améliorée de l'ordre de 60 %. Le procédé de fabrication d'un condensateur électrique haute-tension objet de l'invention et le condensateur ainsi obtenu, permettent ainsi d'améliorer sensiblement les performances des matériels antérieurs avec une fiabilité semblable. En outre, les condensateurs obtenus conformément à l'objet de l'invention sont susceptibles d'être utilisés dans une gamme de température comprise entre - 65°C à + 200°C par exemple.

**Revendications**

1. Procédé de fabrication d'un condensateur électrique haute-tension, caractérisé en ce que ledit procédé consiste :

   **a)** à conditionner une pluralité de feuilles (FE) de matériau diélectrique du type feuilles de mica reconstitué ;

   **b)** à former sur au moins une face de chaque feuille (FE) dudit matériau diélectrique une zone électriquement conductrice (ZE1, ZE2) de façon à constituer une électrode d'un premier ou d'un deuxième type pour le condensateur ;

   **c)** à empiler dans une matrice de formage (MF) une pluralité desdites feuilles de mica reconstitué, deux électrodes successives de type différent étant, dans l'empilement formé, séparées par au moins une épaisseur d'une feuille de mica reconstitué ;

   **d)** à soumettre l'empilement de feuilles de mica reconstitué à un traitement thermique (T°) et à une pression (P) de façon à conditionner l'empilement en un bloc sensiblement homogène ;

   **e)** à soumettre ledit bloc sensiblement homogène à une imprégnation au moyen d'une résine polymérisable et à soumettre le bloc sensiblement homogène imprégné à une polymérisation pour obtenir un bloc final ;

   **f)** à découper ledit bloc final en blocs élémentaires ;

   **g)** à effectuer un apport de matériau électriquement conducteur pour relier, d'une part, lesdites électrodes de premier type et, d'autre part, lesdites électrodes de deuxième type pour former pour chaque bloc élémentaire un condensateur.

2. Procédé selon la revendication 1, caractérisé en ce que la zone électriquement conductrice (ZE1, ZE2) formée sur au moins une face de chaque feuille de mica reconstitué est formée par sérigraphie au moyen d'une encre électriquement conductrice ou par empilage intermédiaire d'une feuille métallique.

3. Procédé selon la revendication 1, caractérisé en ce que, préalablement à l'étape consistant à former une zone électriquement conductrice sur au moins une face de chaque feuille de mica reconstitué (FE), ledit procédé consiste à former sur la ou lesdites faces de la feuille de mica reconstitué une sous-couche (SC) d'imperméabilisation du mica reconstitué.

4. Procédé selon la revendication 3, caractérisé en ce que ladite sous-couche (SC) est formée par déposition d'une couche d'un matériau diélectrique dont la constante diélectrique $\varepsilon r$ a une valeur relative $\varepsilon r$ comprise entre 3 et 100,
$3 \leqq \varepsilon r \leqq 100$.

5. Condensateur électrique haute-tension, caractérisé en ce qu'il est formé d'un empilement d'une pluralité de couches (Ci) de matériau diélectrique en mica reconstitué, chaque couche successive (Ci) étant séparée de la suivante (Ci+1) par au moins une tranche (Ti) électriquement conductrice (E1, E2) formant électrode d'un premier et d'un deuxième type, les électrodes du premier respectivement deuxième type étant interconnectées chacune à chacune pour former les bornes de contact dudit condensateur.

6. Condensateur électrique selon la revendication 5, caractérisé en ce que chaque couche successive de matériau diélectrique en mica reconstitué présente une épaisseur e comprise entre 18 μm et 50 μm.

7. Condensateur électrique selon la revendication 5, caractérisé en ce que deux électrodes successives de type différent (E1, E2) sont séparées dans l'empilement par au moins une couche de matériau diélectrique en mica reconstitué.

8. Condensateur électrique selon la revendication 7, caractérisé en ce que lesdites électrodes (E1, E2) sont formées par une encre électriquement conductrice appliquée par sérigraphie, ou par une feuille métallique intermédiaire.

**9.** Condensateur électrique selon la revendication 7, caractérisé en ce que lesdites électrodes ($E_1$, $E_2$) sont formées au moyen d'un film plastique (FP1, FP2) métallisé, ledit film plastique comportant une métallisation sur au moins l'une de ses faces pour constituer électrode d'un premier ou d'un deuxième type.

**10.** Condensateur électrique selon l'une des revendications 5 à 8 précédentes, caractérisé en ce que ledit empilement comporte en outre entre chaque électrode de l'un ou l'autre type et la face correspondante de la couche de matériau diélectrique en mica reconstitué une sous-couche d'imperméabilisation (SCIi) du mica reconstitué.

**11.** Condensateur selon la revendication 10, caractérisé en ce que la sous-couche d'imperméabilisation (SCIi) est constituée en un matériau diélectrique dont la constante diélectrique $\varepsilon r$ a une valeur relative comprise entre 3 et 100, $3 \leqq \varepsilon r \leqq 100$.

**12.** Condensateur selon la revendication 11, caractérisé en ce que ledit matériau diélectrique constitutif de la sous-couche (SCIi) est un matériau tel qu'un verre, un compososé de borosilicate de plomb, un matériau polymère, ou une céramique.

**13.** Condensateur selon l'une des revendications 10 à 12, caractérisé en ce que chaque couche (Ci) de matériau diélectrique en mica reconstitué, est formée d'une pluralité de couches élémentaires composites (CiIkc), chaque couche élémentaire composite étant formée d'un empilement d'une couche élémentaire de matériau diélectrique en mica reconstitué (CiEk1) comportant sur au moins une de ses faces une sous-couche élémentaire d'imperméabilisation (CiEk2, CiEk3).

**14.** Condensateur selon la revendication 9, caractérisé en ce que le film plastique métallisé (FP1, FP2) est un film choisi dans le groupe des matériaux plastiques tels que polycarbonate, polyester, polypropylène, polysulfure de phénylène, polysufone, polytétrafluoréthylène.

# FIG_1

CS

RMC

OD

FE

CS

a)

FE

ZE1

ZE1 FE

FE ZE2

FE

ZE2

b)

PO

FE

CS

MF

c)

P

ET

P

polymérisation

P

d)

e)

découpe Y

découpe X

f)

pulvérisation
métal

g)

FIG.2

$3 \leqslant \varepsilon r \leqslant 100$

FIG.3

a)

b)

FIG.4

a)

b)

mica reconstitué

métallisation

matériau
imprégnation

sous couche
imperméabilisation

film plastique

FIG.5

# RAPPORT DE RECHERCHE EUROPEENNE

**Office européen des brevets**

Numero de la demande

EP 89 40 1975

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 229 173 (J.F. McHUGH)<br>* Colonne 1, lignes 26-60; colonne 2, ligne 62 - colonne 3, ligne 72 *<br>--- | 1,2,5-8 | H 01 G 4/08<br>H 01 G 4/30 |
| A | FR-A-1 328 877 (JOHNSON, MATTHEY AND CO.)<br>* En entier *<br>--- | 3,4,10-12 | |
| A | FR-A-2 389 211 (EUROFARAD EFD)<br>* Page 3, ligne 34 - page 4, ligne 28; page 5, lignes 29 -37; page 10, lignes 1-3 *<br>--- | 1-8 | |
| A | FR-A-2 608 311 (CO. EUROPEENNE DE COMPOSANTS ELECTRONIQUES LCC.)<br>* Revendications *<br>--- | 9,14 | |
| A | US-A-32 759 914 (P.S. HOFFMAN)<br>* Colonne 1, lignes 52-62; colonne 2, lignes 54-71 *<br>----- | 1,2 | |

**DOMAINES TECHNIQUES RECHERCHES (Int. Cl.5)**

H 01 G

Le présent rapport a été établi pour toutes les revendications

| Lieu de la recherche | Date d'achèvement de la recherche | Examinateur |
|---|---|---|
| LA HAYE | 16-10-1989 | MOMENE Y ARROYO M.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P0402)